# EUROPÄISCHE PATENTSCHRIFT

(11) **EP 2 556 893 B1**
(45) Veröffentlichungstag und Bekanntmachung des Hinweises auf die Patenterteilung: **01.03.2017**
(21) Anmeldenummer: 12179513.2
(22) Anmeldetag: 07.08.2012
(51) Int. Cl.: B02C 19/18, B02C 4/02, B03B 9/06

(54) **Verfahren und Anlage zur Wiedergewinnung von Metallen aus Verbundmaterialien, insbesondere aus Siliciumsolarmodulen, Dünnschichtsolarmodulen, LCD-Displays od. dgl.**
Method and assembly for the recovery of metals from composite materials, in particular from silicon solar modules, thin film solar modules, LCD displays or the like
Procédé et installation de récupération de métaux à partir de matériaux composites, en particulier depuis des modules solaires au silicium, des modules solaires à couche mince, des écrans LCD ou analogues

(30) Priorität: 10.08.2011 DE 102011109922
(43) Veröffentlichungstag der Anmeldung: 13.02.2013
(73) Patentinhaber: LOBBE Industrieservice GmbH & Co. KG, 58642 Iserlohn (DE)
(72) Erfinder: Schultz, Ronald, 06130 Halle (DE); Lehmann, Dieter, 06198 Salzatal (DE); Weiß, Marcus, 06114 Halle (DE)
(74) Vertreter: Meinke, Dabringhaus und Partner GbR

(56) Entgegenhaltungen:
- EP-A1- 1 187 224
- DE-A1-102008 058 530
- US-A- 6 129 779

## Beschreibung

Die Erfindung richtet sich auf ein Verfahren sowie eine Anlage zur Wiedergewinnung von Metallen aus zu recycelndem Verbundmaterial aus Dünnschichtsolarmodulen, Siliciumwafersolarmodulen, LCD-Displays od. dgl., insbesondere aus zu recycelnden Solarmodulen.

Eine derartige Anlage und ein derartiges Verfahren ist aus US6129779 bekannt.

Technologien, wie die Solartechnologie, bedingen Bauformen, bei denen wertvolle Materialien zum Teil im engen Verbund miteinander zusammengefügt sind, derart, dass die Trennung dieser Materialien bei der Wiederaufbereitung derartiger Produkte auf große Schwierigkeiten stößt. Lassen sich Kunststoffe und Metalle, beispielsweise die Aluminiumrahmen derartiger Bauteile, vergleichsweise leicht trennen, so besteht eine besondere Schwierigkeit darin, den Materialverbund, beispielsweise den Laminatverbund zwischen den Glasplatten von Dünnschichtsolarmodulen, so zu trennen, dass die an die Verbundoberflächen angelagerten Metalle ökonomisch zurückgewonnen werden können. Es gibt eine Fülle von Versuchen, diese Schichten wiederzugewinnen, beispielsweise ist aus der DE 195 39 699 C bekannt, den Laminataufbau mit Substrat mit Hilfe eines Wasserstrahles zu entlaminieren. Ein Verfahren zur Materialabtragung an Si-Festkörpern zeigt die DE 10 2006 003 605 B.

Aufgabe der Erfindung ist die Schaffung einer Lösung, mit der die Verbund-materialien flächenmäßig getrennt und die Metalle aus derartigen Produkten sicher und umweltschonend zurückgewonnen werden können.

Mit einem Verfahren der eingangs bezeichneten Art wird die Aufgabe gemäß der Erfindung dadurch gelöst, dass das zu recycelnde Material zunächst auf ca. 70K abgekühlt, anschließend im gekühlten Zustand zerkleinert und nachfolgend einem Nichteisenmetall-Abscheider zugeführt wird.

Durch die sehr starke Unterkühlung des Materiales werden auftretende Spannungskräfte der Verbundmaterialien aufgrund unterschiedlicher Ausdehnungskoeffizienten ausgenutzt, so dass sich die Materialien flächenmäßig voneinander trennen, so dass das Material in nur einer Brecherzone leicht so zerkleinert werden kann, dass das Material im gebrochenen Zustand weiterverarbeitet werden kann. Durch diese Art der Zerkleinerung kann eine Korngröße erreicht werden, bei der der Feinkornanteil <= 2mm auf ein Minimum beschränkt bleibt, so dass sich nach dieser Zerkleinerung ein Gemisch, je nach eingesetztem Solarmodul oder LCD-Display als Ausgangsmaterial, ergibt aus Verbundfolien und anderen Kunststoffen, Nichteisen-Metallen, Reinglas, metalloberflächenbehandeltes Glas bzw. alternativ Silicium-Bruch. Hier kann nun mit für sich gesehen zum Teil bekannten Schritten eine weitere Trennung und Rückgewinnung erfolgen.

In der DE 23 47 108 A1 und auch in der DE 25 50 958 A1 ist die Zerkleinerung und Trennung von Materialien durch tiefe Temperaturen bekannt, wobei das Ziel der dortigen Verfahrensweise darin liegt, Materialien zu verspröden, um dadurch eine leichtere Trennung dieses spröden Materiales möglich zu machen. Aufgrund des Verbundmateriales, bestehend aus Glas, Kunststoff und Silicium, was mit der vorliegenden Verfahrensweise getrennt werden soll, spielt eine Versprödung hier keine Rolle.

Um eine wirtschaftlich optimierte Verfahrensweise zu erreichen, sieht die Erfindung in Ausgestaltung vor, dass das Material zunächst in einer Vorkühlzone, die von einem aus der Kühlzone abgezogenen Luftstrom beaufschlagt wird, vorgekühlt wird, so dass es bereits im vorgekühlten Zustand dem Froster (cyrogener Froster) zugeführt werden kann, der die weitere Abkühlung beispielsweise mittels flüssigen Stickstoffes bewirkt.

Weitere Ausgestaltungen der Erfindung ergeben sich aus den Unteransprüchen.

Dabei kann vorgesehen sein, dass zur Zerkleinerung der tiefgekühlten Materialien auf eine Korngröße von >= 2mm ein Walzenbrecher eingesetzt wird.

Die Erfindung sieht auch vor, dass nach der Auftrennung der Verbundmaterialien dem Materialstrom die Nichteisenbestandteile entzogen und ausgeschleust werden. Hierbei können z.B. die zerkleinerten Aluminiumrahmen und andere Nichteisen-Metalle von dem zur Aufbereitung vorgesehenen Gemisch getrennt und aus dem Prozess ausgeschleust werden, so dass sie dann zur weiteren Verwendung wieder zur Verfügung stehen. Zweckmäßig wird das verbleibende Stoffgemisch anschließend einem Waschbehälter zugeführt, wobei die aufgedampften Metalle durch Lösungsmittel auf Säurebasis gelöst werden, z.B. mittels verdünnter mineralischer Säuren, wie Salpeter- oder Salzsäure.

Zur Unterstützung des Lösungsprozesses sieht die Erfindung auch vor, dass dem Waschbehälter ein Oxidationsmittel zudosiert wird, mit dem im Säuresystem freie naszierende Radikale erzeugt werden, die den Lösungsprozess beschleunigen. Daraus ergeben sich sehr kurze Einwirkzeiten der Säurelösung und ein Arbeiten bei Umgebungstemperatur ist effizient. Eine weitere Energiezuführung in den Prozess ist nicht notwendig.

Zur Gewinnung der reinen Metalle kann in Ausgestaltung erfindungsgemäß das mit Metallen angereicherte Lösungsmittel einem elektrolytischen Bad bzw. einer chemischen Trennung zur Abscheidung der Metalle zugeführt werden.

Die Erfindung sieht auch vor, dass die vom Lösungsmittel umspülte Stofffraktion über einen Schwing- oder Vibrationsförderer zur Unterstützung des Abtropfvorganges aus dem Waschprozess ausgetragen und einem weiteren Spülprozess zugeführt wird.

Eine weitere Ausgestaltung der Erfindung besteht darin, dass nach dem Reinigungsprozess eine Dichteklassierung zur Trennung in Einzelstofffraktionen vorgenommen wird. Je nach Art des zu gewinnenden Metalles kann erfindungsgemäß eine pH-Wert gesteuerte Sulfid- oder Hydroxidfällung vorgenommen werden.

Eine weitere zweckmäßige Ausgestaltung besteht darin, dass die erzeugte Schlammfraktion über eine Kammerfilterpresse od. dgl. abgepresst und das Metallkonzentrat einer weiteren Vermarktung zugeführt wird.

Die Erfindung sieht zur Lösung der Aufgabe auch eine Anlage zur Durchführung des Verfahrens nach einem der vorangehenden Ansprüche vor, die gekennzeichnet ist durch einen Tauch-Linearfroster, der zu dessen Längenänderung aus einzelnen Modulen gebildet ist, mit einer Vorkühlzone mit Beaufschlagung durch einen der Frosterzone abgezogenen Luftstrom.

Statt eines "Linearfrosters" kann verfahrenstechnisch eine Unterkühlung auch mittels beispielsweise einer Bedüsung des zu unterkühlenden Materiales mittels Stickstoff vorgesehen sein, wobei ein Tauchprozess in Flüssigstickstoff zur optimalen Nutzung der Spannungskräfte besonders vorteilhaft ist.

Die Anlage zeichnet sich des Weiteren dadurch aus, dass in Durchlaufrichtung des Rohmateriales dem Froster eine Brecherzone, z.B. ein Walzenbrecher, mit Kratzförderer und anschließenden Nichteisenmetallabscheider zugeordnet ist mit Fördermitteln zur Abscheidung der Nichteisenmetalle von der weiterzubearbeitenden Fraktion.

In Ausgestaltung der Erfindung ist wenigstens ein Waschbehälter dem Nichteisenmetallabscheider nachgeordnet zur Lösung von aufgedampften Metallen, beispielsweise mittels Salpeter- oder Salzsäure, mit einer Kreislaufführung der Lösungsmittel zur Aufkonzentrierung des gelösten Metalles.

Zur Unterstützung des Lösungsprozesses kann wenigstens ein Waschbehälter mit einer Dosierungseinrichtung zur Hinzufügung von Oxidationsmittel ausgerüstet sein.

In weiterer Ausgestaltung ist ein Abluftwäscher zur Behandlung der Überschussgase und deren Neutralisierung vorgesehen.

Zur Austragung des Materiales aus dem Säurebad ist erfindungsgemäß dem Schneckenförderer ein Wäscher nachgeschaltet.

Zur weiteren Verwertung ist eine Klassifizierungseinrichtung dem Waschbehälter nachgeordnet.

Zur Trennung des Metalles aus dem jeweiligen Lösungsmittel kann nach der Erfindung eine elektrolytische Aufbereitung und/oder eine chemische Metallfällung vorgesehen sein.

Der chemischen Metallfällung als beispielsweise pH-Wert-gesteuerte Sulfid- oder Hydroxidfällung kann eine Kammerfilterpresse zum Abpressen der Schlammfraktion nachgeordnet sein.

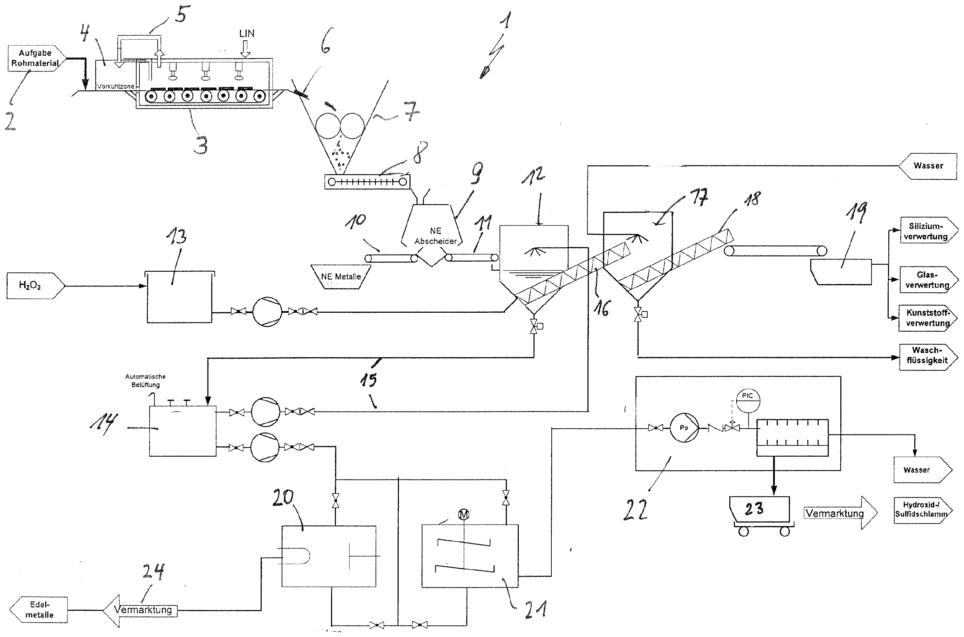

Weitere Merkmale, Einzelheiten und Vorteile der Erfindung ergeben sich aufgrund der nachfolgenden Beschreibung sowie anhand der Zeichnung. Diese zeigt in der einzigen Figur ein Verfahrensschaltbild der erfindungsgemäßen Anlage.

Die allgemein mit 1 bezeichnete Anlage weist in Fließrichtung des bei 2 aufgegebenen Rohmateriales zunächst einen Linearfroster 3 auf, dem eine Vorkühlzone 4 für das aufgegebene Material vorgeschaltet ist, wobei diese Vorkühlzone über eine Leitung 5 mit der Kaltluft aus dem Froster 3 zur Vorkühlung beaufschlagt wird. Die z.B. mit flüssigem Stickstoff auf 70K heruntergekühlten Materialien 6 werden in einem Walzenbrecher 7 abgeworfen, wobei das zerkleinerte Material von einem Kratzförderer 8 in einen Nichteisenmetall-Abscheider 9 weitergefördert wird.

Aus den Nichteisenmetall-Abscheider 9 werden über eine Fördereinrichtung 10 die Nichteisenmetalle einerseits ausgeschleust und andererseits einer weiteren Verarbeitung zugeführt, worauf es hier nicht näher ankommt. Das Restmaterial wird über einen Förderer 11 einem Wäscher 12 zugeführt, dem u.a. aus einem Behälter 13 mit Oxidationsmittel dieses Oxidationsmittel, z.B. H₂O₂, zur Beschleunigung der Lösungsprozesse zugeführt wird und aus einer Säurevorlage 14 die notwendige Säure, die über die Leitungen 15 solange im Kreislauf geführt wird, bis eine entsprechende Metallanreicherung vorliegt.

Das Restmaterial im Wäscher 12 wird über einen Schneckenförderer 16 mit Schwingtechnik in einen Nachwäscher 17 gefördert, um nach Abspülen der Säurereste etc. über einen weiteren Förderer 18 einer Fraktionstrennung zugeführt, was lediglich mit 19 angedeutet ist.

Aus der angereicherten Säure kann mit unterschiedlichen Maßnahmen das Metall entfernt werden. Dargestellt ist die Möglichkeit einer elektrolytischen Trennung 20 einerseits und einer chemischen Fällung 21 andererseits, wobei das aus der chemischen Fällung stammende Material über eine Kammerfilterpresse 22 abgepresst wird und dann einer weiteren Vermarktung, angedeutet mit 23, zugeführt wird. Die Vermarktung der Edelmetalle aus der elektrolytischen Abtrennung 20 ist mit einem Pfeil 24 angedeutet.

Natürlich ist das beschriebene Anlagenbeispiel noch in vielfacher Hinsicht abzuändern, ohne den Grundgedanken zu verlassen. So ist die Erfindung nicht auf die besondere konstruktive Gestaltung der einzelnen Elemente beschränkt, hier können auch Alternativen vorgesehen sein.

### Bezugszeichenliste:

- 1: Anlage
- 2: Rohmaterialaufgabe
- 3: Linearfroster
- 4: Vorkühlzone
- 5: Leitung
- 6: heruntergekühlte Materialien
- 7: Walzenbrecher
- 8: Kratzförderer
- 9: Nichteisenmetall-Abscheider
- 10: Fördereinrichtung
- 11: Förderer
- 12: Wäscher
- 13: Oxidationsmittelbehälter
- 14: Säurevorlage
- 15: Leitungen
- 16: Schneckenförderer
- 17: Nachwäscher
- 18: Förderer
- 19: Fraktionstrennung
- 20: elektrolytische Trennung
- 21: chemische Fällung
- 22: Kammerfilterpresse
- 23: Vermarktung
- 24: Pfeil

## Patentansprüche

1. Verfahren zur Wiedergewinnung von Metallen aus zu recycelndem Verbundmaterial aus Dünnschichtsolarmodulen, Siliciumwafersolarmodulen, LCD-Displays od. dgl., insbesondere aus zu recycelnden Solarmodulen,
**dadurch gekennzeichnet,**
**dass** das zu recycelnde Material zunächst auf ca. 70K abgekühlt, anschließend im gekühlten Zustand zerkleinert und nachfolgend einem Nichteisenmetallabscheider zugeführt wird.

2. Verfahren nach Anspruch 1,
**dadurch gekennzeichnet,**
**dass** das Material zunächst in einer Vorkühlzone, die von einem aus der Kühlzone abgezogenen Luftstrom beaufschlagt wird, vorgekühlt wird.

3. Verfahren nach Anspruch 1 oder 2,
**dadurch gekennzeichnet,**
**dass** zur Zerkleinerung der tiefgekühlten Materialien auf eine Korngröße von >= 2mm ein Walzenbrecher eingesetzt wird.

4. Verfahren nach einem der vorangehenden Ansprüche,
**dadurch gekennzeichnet,**
**dass** nach der Auftrennung der Verbundmaterialien dem Materialstrom die Nichteisenbestandteile entzogen und ausgeschleust werden.

5. Verfahren nach Anspruch 4,
**dadurch gekennzeichnet,**
**dass** das verbleibende Stoffgemisch einem Waschbehälter zugeführt wird, wobei die aufgedampften Metalle durch Lösungsmittel auf Säurebasis gelöst werden, wobei insbesondere in verdünnter Form mineralische Säuren, wie Salpeter oder Salzsäure, eingesetzt werden.

6. Verfahren nach einem der vorangehenden Ansprüche,
**dadurch gekennzeichnet,**
**dass** dem Waschbehälter ein Oxidationsmittel zudosiert wird, mit dem im Säuresystem freie naszierende Radikale erzeugt werden, die den Lösungsprozess beschleunigen.

7. Verfahren nach einem der vorangehenden Ansprüche,
**dadurch gekennzeichnet,**
**dass** das mit Metallen angereicherte Lösungsmittel einem elektrolytischen Bad bzw. einer chemischen Trennung zur Abscheidung der Metalle zugeführt wird.

8. Verfahren nach einem der vorangehenden Ansprüche,
**dadurch gekennzeichnet,**
**dass** die vom Lösungsmittel umspülte Stofffraktion über einen Schwing- oder Vibrationsförderer zur Unterstützung des Abtropfvorganges aus dem Waschprozess ausgetragen und einem weiteren Spülprozess zugeführt wird.

9. Verfahren nach einem der vorangehenden Ansprüche,
**dadurch gekennzeichnet,**
**dass** nach dem Reinigungsprozess eine Dichteklassierung zur Trennung in Einzelstofffraktionen vorgenommen wird.

10. Verfahren nach einem der vorangehenden Ansprüche,
**dadurch gekennzeichnet,**
**dass** nach Art des zu gewinnenden Metalles eine pH-Wert-gesteuerte Sulfid- oder Hydroxidfällung vorgenommen wird.

11. Anlage (1) zur Durchführung des Verfahrens nach einem der vorangehenden Ansprüche,
**gekennzeichnet durch**
einen Tauch-Linearfroster (3), der zu dessen Längenänderung aus einzelnen Modulen gebildet ist, mit einer Vorkühlzone (4) mit Beaufschlagung **durch** einen der Frosterzone abgezogenen Luftstrom (5).

12. Anlage nach Anspruch 11,
**dadurch gekennzeichnet,**
**dass** in Durchlaufrichtung des Rohmateriales (6) dem Froster (3) ein Walzenbrecher mit Kratzförderer und anschließendem Nichteisenmetallabscheider zugeordnet ist mit Fördermitteln zur Abscheidung der Nichtmetalle und der weiterzubearbeitenden Fraktion.

13. Anlage nach einem der vorangehenden Ansprüche 11-12,
**dadurch gekennzeichnet,**
**dass** wenigstens ein Waschbehälter (12) dem Nichteisenmetallabscheider (9) nachgeordnet ist, zur Lösung von aufgedampften Metallen, beispielsweise mittels Salpeter- oder Salzsäure, mit einer Kreislaufführung der Lösungsmittel zur Aufkonzentrierung des gelösten Metalles.

14. Anlage nach einem der vorangehenden Ansprüche 11-13,
**dadurch gekennzeichnet,**
**dass** ein Abluftwäscher zur Behandlung der Überschussgase und deren Neutralisierung vorgesehen ist.

15. Anlage nach einem der vorangehenden Ansprüche 11-14,
**dadurch gekennzeichnet,**
**dass** zur Austragung des Materiales aus dem Säurebad (12) dem Schneckenförderer (16) ein Wäscher (17) nachgeschaltet ist.

16. Anlage nach einem der vorangehenden Ansprüche 11-15,
**dadurch gekennzeichnet,**
**dass** zur Trennung des Metalles aus dem jeweiligen Lösungsmittel eine elektrolytische Aufbereitung und/oder eine chemische Metallfällung vorgesehen ist.

## Claims

1. Method for the recovery of metals from composite materials to be recycled from thin film solar modules, silicon wafer solar modules, LCD displays or the like, in particular from solar modules to be recycled,
**characterized in that**
the material to be recycled is first cooled to about 70K, then disintegrated in the cooled state and thereafter fed to a non-ferrous metal separator.

2. Method according to claim 1,
**characterized in that**
the material is firstly pre-cooled in a pre-cooling zone that is impinged by an air stream drawn off from the cooling zone.

3. Method according to claim 1 or 2,
**characterized in that**
a roll-type crusher is employed to disintegrate the deep-frozen materials to a particle size of >= 2mm.

4. Method according to one of the preceding claims,
**characterized in that**,
after the break up of the composite materials, the non-ferrous components are extracted and discharged from the material flow.

5. Method according to claim 4,
**characterized in that**
the remaining material mix is fed to a wash container, whereby the vapour-deposited metals are removed by acid-based solvent, whereby in particular there are employed mineral acids in diluted form, such as nitric or hydrochloric acid.

6. Method according to one of the preceding claims,
**characterized in that**
the wash container is dosed with an oxidizing agent with which free nascent radicals are generated in the acid system, which accelerate the removal process.

7. Method according to one of the preceding claims,
**characterized in that**
the metal-enriched solvent is fed to an electrolytic bath or a chemical separation to precipitate the metals.

8. Method according to one of the preceding claims,
**characterized in that**
the solvent-rinsed material fraction is carried out of the wash process by means of an oscillating- or vibration conveyor to support the draining process and fed to a further rinsing process.

9. Method according to one of the preceding claims,
**characterized in that**
a density grading is undertaken after the cleaning process to separate into individual material fractions.

10. Method according to one of the preceding claims,
**characterized in that**,
depending on the type of metal to be recovered, there is undertaken a pH-value-controlled sulphide- or hydroxide precipitation.

11. Device (1) for carrying out the method according to one of the preceding claims,
**characterized by**
an immersion linear freezer (3) formed of individual modules to enable a change in length, with a pre-cooling zone (4) with impingement by an air stream (5) drawn off from the freezing zone.

12. Device according to claim 11,
**characterized in that**,
in the flow direction of the raw material (6), there is assigned to the freezer (3) a roll-type crusher with a scraping conveyor and following non-ferrous metal separator with conveying means to separate the non-metals and the fraction to be further processed.

13. Device according to one of the preceding claims 11-12,
**characterized in that**
at least one wash container (12) is arranged after the non-ferrous metal separator (9) for removal of vapour-deposited metals, for example by means of nitric or hydrochloric acid, with a circulating solvent feed to concentrate the removed metal.

14. Device according to one of the preceding claims 11-13,
**characterized in that**
there is provided an exhaust washer for treatment of the excess gases and their neutralisation.

15. Device according to one of the preceding claims 11-14,
**characterized in that**
to withdraw the material from the acid bath (12) a washer (17) is arranged after the screw conveyor (16).

16. Device according to one of the preceding claims 11-15,
**characterized in that**
there is provided an electrolytic preparation and/or a chemical metal precipitation to separate the metal from the respective solvent.

## Revendications

1. Procédé de récupération de métaux à partir de matériaux composites à recycler parmi des modules solaires à couche mince, des modules solaires au silicium, des écrans LCD ou d'autres produits analogues, notamment à partir de modules solaires à recycler,
**caractérisé en ce que** le matériau à recycler est d'abord refroidi à 70K environ, puis broyé à l'état refroidi et ensuite envoyé à un séparateur de métaux non ferreux.

2. Procédé selon la revendication 1, **caractérisé en ce que** le matériau est d'abord refroidi préalablement dans une zone de refroidissement préalable qui est alimentée par un flux d'air tiré de la zone de refroidissement.

3. Procédé selon la revendication 1 ou 2, **caractérisé en ce qu'**un broyeur à cylindres est utilisé pour le broyage des matériaux refroidis à basse température à une granulométrie ≥2mm.

4. Procédé selon l'une des revendications précédentes, **caractérisé en ce que**, après la séparation des matériaux composites, les éléments non ferreux sont extraits du flux de matériaux et évacués.

5. Procédé selon la revendication 4, **caractérisé en ce que** le mélange de matières restant est envoyé à un récipient de lavage, les métaux déposés par évaporation étant dissous par un solvant à base acide, des acides minéraux sous forme diluée, par exemple de l'acide nitrique ou de l'acide chlorhydrique, étant notamment utilisés.

6. Procédé selon l'une des revendications précédentes, **caractérisé en ce qu'**un agent oxydant est ajouté dans le récipient de lavage, agent oxydant avec lequel des radicaux libres naissants qui accélèrent le processus de dissolution sont produits dans le système acide.

7. Procédé selon l'une des revendications précédentes, **caractérisé en ce que** le solvant enrichi en métaux est envoyé à un bain électrolytique c'est-à-dire à une séparation chimique pour le dépôt des métaux.

8. Procédé selon l'une des revendications précédentes, **caractérisé en ce que** la fraction de matière rincée par le solvant est extraite du processus de lavage par l'intermédiaire d'un convoyeur oscillant ou vibrant pour aider l'opération d'égouttage et est envoyée à un autre processus de rinçage.

9. Procédé selon l'une des revendications précédentes, **caractérisé en ce que**, après le processus de nettoyage, un tri par densité est effectué pour séparer les différentes fractions de matières.

10. Procédé selon l'une des revendications précédentes, **caractérisé en ce que**, selon le type de métal à récupérer, une précipitation au sulfure ou à l'hydroxyde contrôlée par pH est effectuée.

11. Installation (1) pour la mise en oeuvre du procédé selon l'une des revendications précédentes, **caractérisée par** un tunnel congélateur par immersion (3), qui est formé de modules individuels pour en modifier la longueur, avec une zone de refroidissement préalable (4) alimentée par un flux d'air (5) tiré de la zone de congélation.

12. Installation selon la revendication 11, **caractérisée en ce que**, dans le sens de passage de la matière première (6), un broyeur à cylindres avec convoyeur à racloirs puis avec séparateur de métaux non ferreux est associé au congélateur (3), avec des moyens de transport pour séparer les non-métaux et la fraction encore à traiter.

13. Installation selon l'une des revendications 11 à 12, **caractérisée en ce qu'**au moins un récipient de lavage (12) est agencé en aval du séparateur de métaux non ferreux (9), pour la dissolution de métaux déposés par évaporation, par exemple au moyen d'acide nitrique ou d'acide chlorhydrique, avec une circulation en boucle du solvant pour concentrer le métal dissous.

14. Installation selon l'une des revendications 11 à 13, **caractérisée en ce qu'**un dispositif de lavage d'air sortant est prévu pour traiter les gaz excédentaires et pour les neutraliser.

15. Installation selon l'une des revendications 11 à 14, **caractérisée en ce que**, pour extraire le matériau du bain acide (12), un dispositif de lavage (17) est placé en aval du convoyeur à vis (16).

16. Installation selon l'une des revendications 11 à 15, **caractérisée en ce que**, pour séparer le métal du solvant respectif, une préparation électrolytique et/ou une précipitation chimique de métal sont prévues.
